Europäisches Patentamt

European Patent Office

Office européen des brevets

(11) Publication number: **0 509 613 A2**

# EUROPEAN PATENT APPLICATION

(21) Application number: **92201820.5**

(22) Date of filing: **22.12.88**

(51) Int. Cl.5: **A22B 5/00, A22B 5/20**

This application was filed on 20 - 06 - 1992 as a divisional application to the application mentioned under INID code 60.

(30) Priority: **23.12.87 AU 6045/87**

(43) Date of publication of application:
**21.10.92 Bulletin 92/43**

(60) Publication number of the earlier application in accordance with Art.76 EPC: **0 397 703**

(84) Designated Contracting States:
**AT BE CH DE FR GB IT LI LU NL SE**

(71) Applicant: **COMMONWEALTH SCIENTIFIC AND INDUSTRIAL RESEARCH ORGANISATION**
**Limestone Avenue**
**Campbell, Australian Capital Territory 2601(AU)**
Applicant: **MEAT RESEARCH CORPORATION**
**Cnr of Elizabeth and Bathurst Streets**
**Sydney, New South Wales 2000(AU)**

(72) Inventor: **Rankin, Russel James CSIRO Meat Research**
**Laboratory Cnr Creek & Wynnum Roads**
**Cannon Hill OLD 4170(AU)**
Inventor: **De Chastel, David John**

**Deceased(AU)**

Inventor: **Wescombe, Graeme Leslie CSIRO Meat Research**
**Laboratory Cnr Creek & Wynnum Roads**
**Cannon Hill OLD 4170(AU)**
Inventor: **Kerr, David Teal CSIRO Meat Research Laboratory**
**Cnr Creek & Wynnum Roads**
**Cannon Hill OLD 4170(AU)**
Inventor: **Boyce, Phillip Rodney CSIRO Meat Research**
**Laboratory Cnr Creek & Wynnum Roads**
**Cannon Hill OLD 4170(AU)**
Inventor: **White, Raymond Malcolm CSIRO Meat Research**
**Laboratory Cnr Creek & Wynnum Roads**
**Cannon Hill OLD 4170(AU)**
Inventor: **Tritchler, Robert William CSIRO Meat Research**
**Laboratory Cnr Creek & Wynnum Roads**
**Cannon Hill OLD 4170(AU)**
Inventor: **Buhot, John William CSIRO Meat Research Laboratory**
**Cnr Creek & Wynnum Roads**
**Cannon Hill OLD 4170(AU)**

(74) Representative: **Jones, Graham H.**
**Graham Jones & Company 77 Beaconsfield Road Blackheath**
**London SE3 7LG(GB)**

(54) **Automatic animal brisket cutting.**

(57) An apparatus for automatically processing an animal carcass, the apparatus being characterised by carcass locating means (186) for locating and holding the rib cage and brisket (20) of a carcass (183) against substantial movement, brisket shearing means (21) for cutting the brisket (20) with a shearing action, the shearing means (21) comprising a shearing blade (189) and a reaction member (188) which cooperates with the shearing blade (189) to create the shearing action as the shearing blade (189) is moved relatively towards and away from the reaction member (188), drive means for advancing the shearing means (21) relative to the carcass (183) so that the shearing blade (189) and the reaction member (188) are located on opposite sides of the brisket (20), the drive means further advancing the shearing means (21) in use along the brisket (20) in the general longitudinal direction of the carcass (183) and moving the shearing blade (189) relatively towards and away from the reaction member (188) to

EP 0 509 613 A2

EP 0 509 613 A2

shear the brisket (20) and the covering tissues.

FIG. 1.

This invention relates to the handling of animals and, in particular, to apparatus for automatic processing of animals as in abattoirs, boning plants, etc.

In Australian Patent Specification Nos. 35,992/84 and 19,034/88, an animal processing line is described which includes an animal lead up race, capture and stun assembly, and hock and horn removal stations located after the animal has been stuck. The carcass is then ready for manual or automatic dressing and boning operations.

One of the operations carried out on a carcass during dressing and boning operations is cutting of the brisket to assist in the removal of viscera from the carcass. This is usually carried out under direct manual control which adds to the processing costs per carcass. In Australian Patent Specification No. 31,317/84 there is described an automatic apparatus for cutting the brisket of a carcass suspended by the forelegs. The apparatus includes a circular saw which is lowered and moves downwardly from the neck region through the brisket and abdomen. There is still substantial risk of cutting viscera with this apparatus. Also a circular saw can easily stall due to an increase in resistance. Also circular saws can be difficult to guide. Furthermore a circular saw creates a substantial amount of bone dust requiring removal and also there is a significant loss of saleable body weight due to the width of brisket and tissue cut out by the saw.

It is an object of the present invention to provide automatic carcass processing apparatus which is capable of efficiently and effectively automatically cutting the brisket of the carcass with minimal risk of damaging the viscera and preferably with minimal loss of body weight.

According to the present invention there is provided an apparatus for automatically processing an animal carcass, the apparatus comprising carcass locating means for locating and holding the rib cage and brisket of a carcass against substantial movement, brisket shearing means for cutting the brisket with a shearing action, the shearing means comprising a shearing blade and a reaction member which cooperates with the shearing blade to create the shearing action as the shearing blade is moved relatively towards and away from the reaction member, drive means for advancing the shearing means relative to the carcass so that the shearing blade and the reaction member are located on opposite sides of the brisket, the drive means further advancing the shearing means in use along the brisket in the general longitudinal direction of the carcass and moving the shearing blade relatively towards and away from the reaction member to shear the brisket and the covering tissues.

The drive means is preferably operative to advance the shearing means along the brisket from the end of the brisket nearer the abdomen and towards the neck end of the brisket.

The reaction member may be pivotally movable relative to the brisket about a rear end of the reaction member whereby the reaction member generally follows the contours of the brisket during advance of the shearing means.

The drive means is preferably operative to advance the shearing means in a series of steps, the drive means firstly advancing the shearing means with the shearing blade and reaction member separated, secondly stopping the advancing movement and effecting a cut of the brisket, and thirdly opening the shearing blade for a further advancing movement, this sequence being repeated until the brisket has been cut along its entire length, the reaction member moving pivotally about its rear end during the advancing movements of the shearing means so as to generally follow the contour of the brisket.

The reaction member may comprise an anvil member, the shearing blade being operative to cut downwardly onto an upper reaction surface of the anvil so as to achieve the shearing action between the shearing blade and the anvil. The upper reaction surface of the anvil may be resilient so as to yield as the shearing blade approaches and comes into contact with the anvil thereby enabling complete severing of the brisket and covering tissues.

Preferably the reaction member is arranged to be brought into the animal carcass on the inside face of the brisket, the shearing blade being maintained external to the carcass and being pivotally movable relative to the reaction member to achieve the shearing action.

Preferably the carcass locating means includes means for supporting the carcass in an inverted position with the spine located beneath the carcass throughout the brisket cutting operation whereby the viscera fall away from the brisket internally of the carcass thereby providing a substantially clear inside face of the brisket along which the shearing means is advanced.

At the processing station, the equipment can be thoroughly cleaned and/or sterilized for reuse so as to prevent cross contamination of carcasses. To this end, the design of such equipment takes into account the need for thorough cleaning.

Possible and preferred features of the present invention will now be described with particular reference to the accompanying drawings. However it is to be understood that the features illustrated in and described with reference to the drawings are not to be construed as limiting on the scope of the invention. In the drawings:

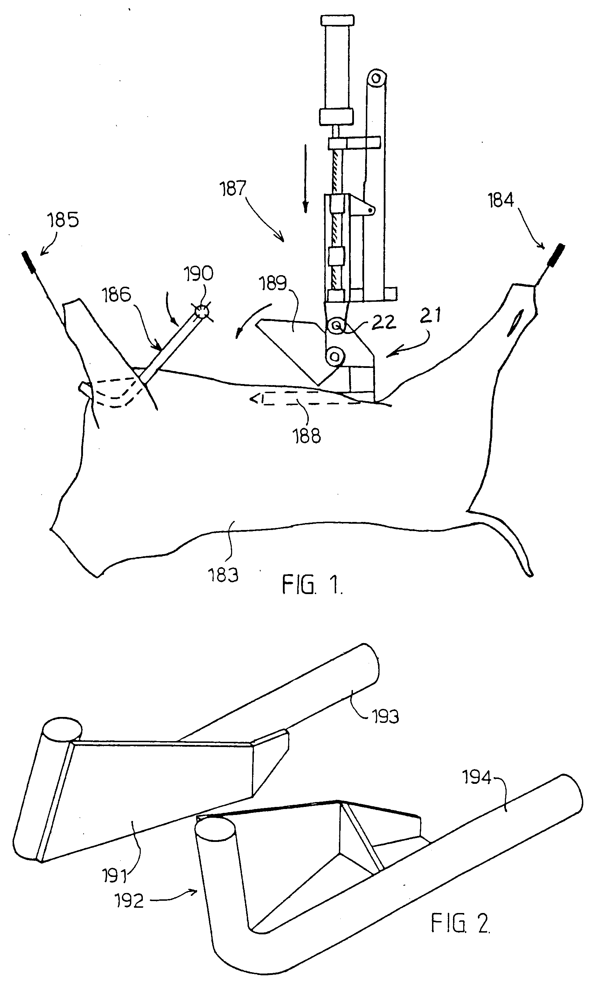

FIGS. 1 to 4 show details of an automatic brisket cutter according to the present invention.

In an abattoir live animals are brought from holding yards, separated and isolated, immobilized, stunned and stuck. After bleeding and removal of hocks and horns, manual hide prearation may take place. While the carcass is inverted, hide is released from the legs and under body to depend at the carcass sides in preparation for further removal automatically at a later stage along the line as described in patent specification No. WO 89/05584. The legs are then shackled and the shackles are engaged with overhead rails so that, with a suitable drive, which may be similar to existing chains, the carcass is drawn upwardly to an elevated position for further processing. Manual operations continue to prepare the carcass for head removal, hide removal and evisceration. This may include severing the head hide; removal of the muzzle; recordal of tooth number; removal of the tongue; and complete the clearing of the oesophagus, trachea and arteries from the thoracic cavity. The tongue and then the head may be passed to a separate conveyor to be separately processed. Head removal may be an automatic operation utilising apparatus described in PCT specificiation No. WO 89/00584.

Also at the rear end of the carcass, a series of manual operations may be carried out to prepare for aitchbone cutting, hide removal, evisceration and splitting. This may include rumping; mark and strip the tail; remove tail bush; remove the pizzle and erector muscles; clear and pull the rectum and bung (sphincter); and bag the anus.

Automatic operations may begin after the manual preparation steps and stations enabling this are described in PCT Specification No. WO 89/05584. After most processes, the carcass is split by a suitable means such as a band saw or rotary saw which is described below. Inspection may be undertaken at various stages with condemned carcasses ejected from the line. Trimming may proceed with further inspection after carcass splitting. Carcasses requiring further trimming may be ejected from the line to enable further processing. Finished carcasses may be fed off onto a storage line when carcasses are washed, inspected, etc. on their way to chiller rooms of the usual character. Inspection is undertaken as usual with those carcasses that require it being ejected for a rewash. Decontamination may be undertaken with grading being performed when necessary. The front leg may be released to allow the carcass half to hang from its back leg. The removed shackle might be fed back to the head of the line automatically.

In the following description, there is set out a particular preferred structure for a processing station where briskets are cut. The actual placement of this station along a processing line of the above described character may be varied according to particular objectives.

Referring to FIGS. 1 to 4, to prepare the carcass 183 for evisceration, the brisket 20 is desirably cut open. The carcass is best presented for brisket cutting when orientated horizontally, suspended by the four legs following hide removal and prior to evisceration.

The automation of brisket cutting may be achieved with the carcass 183 and its brisket 20 positioned centrally below a shearing means 21. The centralising, cutting, and indexing may be performed in a thirty second cycle time. The carcass 183 may travel transversely into the brisket cutting station and can be stopped upon triggering a sensor. The brisket 20 may then be centralised with locating means 186 comprised by a vee-shaped clamp pad acting directly on the brisket region. The carcass 183 may remain clamped until the cutting cycle is completed.

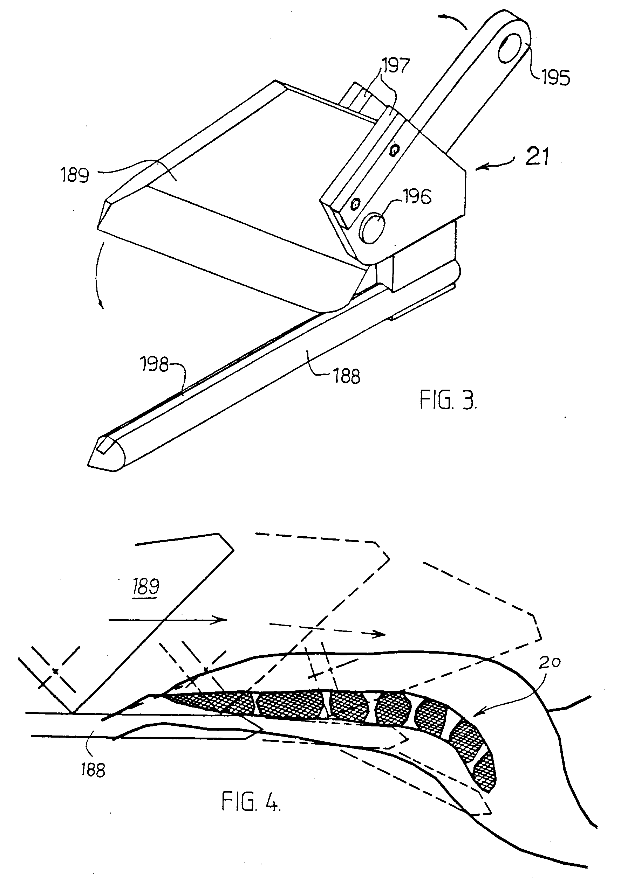

Cutting may be achieved, as described below with reference to FIGS. 1 to 4, by an hydraulic knife edge shear blade 189 that can cut open the brisket 20. Such a cutter is suitable because it can cut through both meat and bone to eliminate the traditional marking cut along the brisket centre line. In operation, a shear reaction member 188 is dropped into a marking cut, through the belly between the brisket 20 and the pizzle, stopping when it is below the line of the brisket 20. The shearing means 21 can then traverse forward a preset distance so that the brisket 20 is between the blade 189 and the reaction member 188. The blade 189 then acts to cut, open, and traverse forward to the next preset cutting point. The shearing means 21 unit may be free to pivot through say 60° (about axis 22), dampened by a pneumatic cylinder to enable following the brisket contours. As the reaction member 188 runs along the underside of the brisket 20, the shearing means 21 can pivot, keeping the cutting blade angle at a minimum. The shear blade 189 is best advanced the full length of the previous cut before stopping for the next so as to locate the blade 189 in the toe of the previous cut, preventing a miscut. The cycle may be complete after typically, three cuts (see FIG. 4), and the unit may be then removed for cleaning and sterilization ready for the next carcass.

In FIG. 1, carcass 183 is suspended by shackles 184 and 185, belly up with the carcass centralised by a locating means 186 described below with the reference to FIG. 2. A shearing means 21 is lowered through a belly cut with reaction member 188 dropped below the brisket 20 when the shearing means 21 may be advanced with blade 189 open, to an initial cutting point when blade 189 is closed to shear through the brisket 20. By opening the blade 189 and advancing the unit 187, a number of cuts may be made as the unit advances forwardly to complete a cut through the entire length of the brisket.

In FIG. 2 is shown a perspective view of the jaws 191, 192 of locating means 186 of FIG. 1 which may pivot downwardly about point 190 until jaws 191 and 192 contact the carcass as shown in FIG. 1. The locating means comprises a pair of downwardly dependent, rotably mounted arms 193 and 194 with a pair of plates as shown attached at their forward end to establish contact with the carcass and centralise the brisket 20 with the shearing means 21.

FIG. 3 shows the shearing means 21 in greater detail. The brisket 20 of a carcass 183 is scissored between shear blade 189 and a reaction member 188 by action of a hydraulic cylinder (not shown) acting on arm 195 so as to turn blade 189 in support blocks 197 about pivot 196. The reaction memeber 188 acts as an anvil onto which the blade 189 cuts. The anvil is fitted with a Ralloy insert 198 for engagement of the cutting blade 189 at the closure of the blade 189 at the completion of a cut. The insert 198 is resilient to yield as the blade 189 approaches and comes into contact with the anvil to enable complete cutting of the brisket 20 and covering tissues and without splintering.

It is to be understood that various alterations, modifications and/or additions may be made to the features of the possible and preferred embodiment-(s) of the invention as herein described without departing from the spirit and scope of the invention.

## Claims

1. An apparatus for automatically processing an animal carcass, the apparatus being characterised by carcass locating means (186) for locating and holding the rib cage and brisket (20) of a carcass (183) against substantial movement, brisket shearing means (21) for cutting the brisket (20) with a shearing action, the shearing means (21) comprising a shearing blade (189) and a reaction member (188) which cooperates with the shearing blade (189) to create the shearing action as the shearing blade (189) is moved relatively towards and away from the reaction member (188), drive means for advancing the shearing means (21) relative to the carcass (183) so that the shearing blade (189) and the reaction member (188) are located on opposite sides of the brisket (20), the drive means further advancing the shearing means (21) in use along the brisket (20) in the general longitudinal direction of the carcass (183) and moving the shearing blade (189) relatively towards and away from the reaction member (188) to shear the brisket (20) and the covering tissues.

2. An apparatus as claimed in claim 1 characterised in that the drive means is operative to advance the shearing means (21) along the brisket (20) from the end of the brisket (20) nearer the abdomen and towards the neck end of the brisket (20).

3. An apparatus as claimed in claim 1 or 2 characterised in that the reaction member (188) is pivotally movable relative to the brisket (20) about a rear end of the reaction member (20) whereby the reaction member (188) generally follows the contours of the brisket (20) during advance of the shearing means (21).

4. An apparatus as claimed in claim 3 characterised in that the drive means is operative to advance the shearing means (21) in a series of steps, the drive means firstly advancing the shearing means (21) with the shearing blade (189) and reaction member (188) separated, secondly stopping the advancing movement and effecting a cut of the brisket (20), and thirdly opening the shearing blade (189) for a further advancing movement, this sequence being repeated until the brisket (20) has been cut along its entire length, the reaction member (188) moving pivotally about its rear end during the advancing movements of the shearing means so as to generally follow the contour of the brisket (20).

5. An apparatus as claimed in any one of claims 1 to 4 characterised in that the reaction member (188) comprises an anvil member, the shearing blade (189) being operative to cut downwardly onto an upper reaction surface (198) of the anvil so as to achieve the shearing action between the shearing blade (189) and the anvil.

6. An apparatus as claimed in claim 5 characterised in that the upper reaction surface (198) of the anvil is resilient so as to yield as the shearing blade (189) approaches and comes into contact with the anvil thereby enabling complete severing of the brisket (20) and covering tissues.

7. An apparatus as claimed in any one of claims 1 to 6 characterised in that the reaction member (188) is arranged to be brought into the animal carcass (183) on the inside face of the brisket (20), the shearing blade (189) being maintained external to the carcass (183) and being pivotally movable relative to the reaction member (188) to achieve the shearing action.

8. An apparatus as claimed in any one of claims 1 to 7 characterised in that the carcass locating means (186) includes means (184, 185) for supporting the carcass (183) in an inverted position with the spine located beneath the carcass (183) throughout the brisket cutting operation whereby the viscera fall away from the brisket (20) internally of the carcass (183) thereby providing a substantially clear inside face of the brisket (20 along which the shearing means is advanced.

FIG. 1.

FIG. 2.

FIG. 3.

FIG. 4.